# FASCICULE DE BREVET EUROPEEN

(11) **EP 2 308 808 B1**
(45) Date de publication et mention de la délivrance du brevet: **18.07.2018**
(21) Numéro de dépôt: 10182498.5
(22) Date de dépôt: 28.02.2003
(51) Int. Cl.: C03B 5/43, C04B 35/484

(54) **PRODUIT FONDU DE ZIRCONE COMPORTANT DE L'OXYDE D'YTTRIUM**
FEUERFESTER ZIRKON-SCHMELZPRODUKT, DAS YTTRIUMOXID ENTHÄLT
MOLTEN ZIRCONIA REFRACTORY PRODUCT COMPRISING YTTRIUM OXIDE

(30) Priorité: 01.03.2002 FR 0202635
(43) Date de publication de la demande: 13.04.2011
(62) Demande divisionnaire de: 03720654.7
(73) Titulaire: Saint-Gobain Centre de Recherches et d'Etudes Européen, 92400 Courbevoie (FR)
(72) Inventeur: Boussant-Roux, Yves, 84140 Montfavet (FR); Gaubil, Michel, 30133 Les Angles (FR)
(74) Mandataire: Nony

(56) Documents cités:
- EP-A1- 0 952 125
- US-A- 5 502 012
- PATENT ABSTRACTS OF JAPAN vol. 2000, no. 13, 5 février 2001 (2001-02-05) -& JP 2000, 302560, A, (TOSHIBA MONOFRAX CO LTD), 31 octobre 2000 (2000-10-31)
- DATABASE WPI Section Ch, Week 197848 Thomson Scientific, London, GB; Class L01, AN 1978-86594A XP002225519, -& JP 53 121012 A (NIPPON ELECTRIC GLASS CO) 23 octobre 1978 (1978-10-23)

## Description

L'invention concerne un produit réfractaire fondu et coulé à forte teneur en zircone.

Parmi les produits réfractaires, on distingue les produits fondus et coulés, bien connus pour la construction des fours de fusion du verre, et les produits frittés.

A la différence des produits frittés, les produits fondus et coulés comportent le plus souvent une phase vitreuse intergranulaire reliant des grains cristallisés. Les problèmes posés par les produits frittés et par les produits fondus et coulés, et les solutions techniques adoptées pour les résoudre, sont donc généralement différents. Une composition mise au point pour fabriquer un produit fritté n'est donc pas a *priori* utilisable telle quelle pour fabriquer un produit fondu et coulé, et réciproquement.

Les produits fondus et coulés, souvent appelés électrofondus, sont obtenus par fusion d'un mélange de matières premières appropriées dans un four à arc électrique ou par toute autre technique adaptée à ces produits. Le liquide fondu est ensuite coulé dans un moule puis le produit obtenu subit un cycle de refroidissement contrôlé.

Parmi les produits fondus et coulés, les produits électrofondus à forte teneur en zircone, c'est-à-dire comportant plus de 85% en poids de zircone (ZrO₂), sont réputés pour leur qualité de grande résistance à la corrosion sans coloration du verre produit et sans génération de défauts.

Les produits électrofondus à forte teneur en zircone comportent classiquement de la silice (SiO₂) et de l'alumine (Al₂O₃) de manière à former une phase vitreuse intergranulaire permettant de supporter de manière efficace les variations de volume de la zircone lors de sa transformation allotropique réversible de la phase monoclinique à la phase tétragonale.

Classiquement, les produits électrofondus à forte teneur en zircone comportent également de l'oxyde de sodium (Na₂O) pour éviter la formation de zircon à partir de la zircone et de la silice présentes dans le produit. La formation de zircon est en effet néfaste puisqu'elle s'accompagne d'une diminution de volume de l'ordre de 20% créant ainsi des contraintes mécaniques à l'origine de fissurations.

Le produit ER-1195, produit et commercialisé par la Société Européenne des Produits Réfractaires et couvert par le brevet EP-B-403387, est aujourd'hui largement utilisé dans les fours de fusion du verre. Son analyse chimique comprend environ 94% de zircone, 4 à 5% de silice, environ 1% d'alumine et 0,3% d'oxyde de sodium et est typique des produits à forte teneur en zircone utilisés pour les fours verriers. Une telle composition confère au produit une bonne « faisabilté industrielle », c'est-à-dire que les blocs fabriqués ne se morcellent pas lors de leur fabrication, ou, quand ils présentent des fissures, ces fissures sont trop peu nombreuses pour les rendre impropres à leur destination.

Les produits à forte teneur en zircone ne peuvent être utilisés dans les zones des fours de verrerie à « basse » température, c'est-à-dire à des températures inférieures à 1150°C, par exemple dans les zones terminales, ou dans des fours dans lesquels ils sont en contact avec certains types de verres, en particulier les verres alcalins. Dans ces situations, l'utilisation de produits électrofondus à forte teneur en zircone entraîne la formation de bulles indésirables dans le verre.

JP2000 302560 décrit un produit réfractaire comportant nécessairement B₂O₃. EP 0 952 125 A1 décrit un produit réfractaire fritté à haute teneur en zircone.

Le but de la présente invention est de fournir un produit réfractaire fondu et coulé à forte teneur en zircone ne provoquant pas, ou peu, de phénomène de bullage dans les conditions décrites ci-dessus, tout en présentant une faisabilité industrielle satisfaisante.

On atteint ce but au moyen d'un produit réfractaire selon la revendication 1.

De manière surprenante, on constate, comme on le verra plus en détail dans la suite de la description, qu'une telle composition confère au produit selon l'invention une bonne capacité contre le bullage et une bonne faisabilité industrielle.

Selon d'autres caractéristiques de la présente invention,
- le produit comporte, en pourcentage en poids sur la base des oxydes, au moins 0,5% et/ou au plus 1,5% de Y₂O₃,
- le produit comporte, en pourcentage en poids sur la base des oxydes, de 2 à 6% de SiO₂,
- le produit comporte, en pourcentage en poids sur la base des oxydes, au moins 0,4% et/ou au plus 1,6% de Al₂O₃,
- Na₂O: 0,12 à 1%.

De préférence, le produit ne comporte pas de P₂O₅.

L'invention concerne aussi l'utilisation d'un produit réfractaire selon l'invention dans une zone terminale d'un four de verrerie et/ou dans un four de verrerie de fabrication de verre alcalin.

L'invention concerne enfin un procédé de fabrication d'un produit réfractaire comportant au moins un mélange de matières premières, une fusion dudit mélange, et une coulée dudit mélange en fusion dans un moule, lesdites matières premières comportant au moins de l'alumine (Al₂O₃), de la zircone (ZrO₂), de la silice (SiO₂) et de l'oxyde de sodium (Na₂O) et/ou de l'oxyde de potassium (K₂O).

Ce procédé est remarquable en ce que lesdites matières premières comportent en outre au moins de l'oxyde d'yttrium Y₂O₃ et optionnellement de l'oxyde de calcium CaO, les quantités desdites matières premières étant déterminées de manière que ledit produit soit conforme à l'invention.

Dans le produit selon l'invention, la teneur en silice ne doit pas dépasser 8% pour assurer une teneur en zircone minimale, et donc une résistance à la corrosion satisfaisante.

La teneur en oxyde de sodium Na₂O et/ou en oxyde de potassium (K₂O) ne doit pas dépasser 1% sinon la résistance à la corrosion est dégradée.

Selon l'invention, la teneur en oxyde de sodium (Na₂O) et/ou en oxyde de potassium (K₂O) doit cependant être supérieure à 0,12%, en pourcentage en poids sur la base des oxydes.

En effet, Na₂O joue le rôle d'inhibiteur dans la réaction de transformation zircone + silice en zircon qui est à l'origine de fissures. Na₂O pourra partiellement au moins être remplacé par K2O.

Les essais non limitatifs suivants sont donnés dans le but d'illustrer l'invention.

Dans ces essais, on a employé les matières premières suivantes :
- la zircone CC10 vendue par la Société Européenne des Produits Réfractaires contenant principalement en moyenne, en poids, 98,5% de ZrO₂+HfO₂, 0,5% de SiO₂ et 0,2% de Na₂O,
- le sable de zircon apportant, en poids, environ 33% de silice et 67% de zircone,
- l'alumine de type AC44 vendue par la société Pechiney et contenant en moyenne 99,4% d'Al₂O₃, en poids,
- le carbonate de sodium apportant, en poids, 58,5% de Na₂O,
- l'oxyde d'yttrium de pureté supérieure à 99%, et
- le carbonate de chaux apportant 56% de CaO, en poids.

Pour chaque essai, les matières premières ont été dosées et mélangées, de manière que le mélange comporte, en pourcentage en poids sur la base des oxydes, les proportions d'oxydes telles qu'indiquées dans la ligne du tableau 2 correspondant à cet essai. Le constituant majoritaire, ZrO₂, est le complément à 100%.

L'analyse chimique du produit constituant ces blocs est donnée dans le tableau 2. Il s'agit d'une analyse chimique moyenne, donnée en pourcentage en poids sur la base des oxydes du produit.

Le mélange a ensuite été fondu selon le procédé classique de fusion en four à arc.

La matière en fusion a été coulée dans des moules pour obtenir des blocs de format 200 mm x 400 mm x 150 mm.

Sur chaque bloc, des échantillons en forme de creuset de diamètres intérieur de 30 mm et extérieur de 50 mm ont été prélevés. Pour réaliser un test de bullage, un échantillon est rempli sur une hauteur de 20 mm d'un verre oxydé contenant un taux élevé (22%) de composés alcalins (Na₂O+K₂O). Le tout est ensuite porté à la température de 1120°C sous air, sans balayage, pour reproduire les conditions de température et d'atmosphère caractéristiques des conditions d'utilisation industrielle.

Après refroidissement du verre, on évalue le nombre de bulles dans le verre remplissant le creuset de l'essai et on détermine, entre 0 (verre exempt de bulles) et 10, un indice de bullage (IB), proportionnel au nombre de bulles de gaz emprisonnées dans le verre. Lorsqu'il y a un bullage très important(au-delà de 1B = 10), on considère être en présence d'un phénomène de moussage (M).

Pour donner satisfaction, un produit doit présenter un indice de bullage inférieur ou égal à 5.

En plus d'un bon comportement face au phénomène de bullage, le produit doit présenter une bonne « faisabilité industrielle », c'est-à-dire que les pièces fabriquées ne doivent pas se morceler lors de leur fabrication, ni présenter un nombre de fissures les rendant impropres à leur destination.

Dans les essais rapportés ci-dessous, la faisabilité est évaluée par un examen visuel des blocs, pratiqué par un homme de l'art. L'homme de l'art évalue si le produit est acceptable pour une application en four de verrerie, et attribue en conséquence un indice de faisabilité (IF), de la manière suivante :

**Tableau 1**

| Examen visuel des blocs de format 200x400x150 mm | IF |
|---|---|
| Absence de défaut apparents | 3 |
| Présence de quelques fissures, mais blocs acceptables | 2 |
| Blocs morcelés ou fissurés de manière inacceptable | 1 |

Pour simuler les variations thermiques rencontrées par les blocs réfractaires des fours de verrerie, les échantillons des essais 14 à 17 ont subi un traitement thermique de 48 heures à 1250°C avant d'être refroidi, puis de subir le test de bullage.

**Tableau 2**

| Essai | Composition du produit testé (% massique sur la base des oxydes) | | | | | | | | | Résultats | |
|---|---|---|---|---|---|---|---|---|---|---|---|
| | SiO₂ | Al₂O₃ | Na₂O | CaO | MgO | Y₂O₃ | TiO₂ | CeO₂ | V₂O₅ | IF | IB |
| Ref | 4,3 | 1,2 | 0,3 | / | / | / | / | / | / | 3 | M |
| 1 | 4,25 | 1,15 | 0,35 | / | / | / | 0,6 | / | / | 3 | 5 |
| 2 | 4,1 | 1,07 | 0,3 | / | / | / | 1,26 | / | / | 3 | 1 |
| 3* | 4,2 | 1,18 | 0,33 | / | / | 0,7 | / | / | / | 2 | 5 |
| 4* | 4,39 | 1 | 0,44 | / | / | 1,1 | / | / | / | 2 | 4 |
| 5* | 4,19 | 1,37 | 0,27 | / | / | 1,4 | / | / | / | 2 | 1 |
| 6 | 3,8 | 1,23 | 0,28 | / | / | / | / | / | 0,3 | 3 | 2 |
| 7 | 4,12 | 1,5 | 0,31 | / | / | / | / | / | 0,5 | 3 | 1 |
| 8* | 4,54 | 1,44 | 0,33 | 0,76 | / | / | / | / | / | 3 | 1 |
| 9* | 4,26 | 1,34 | 0,31 | 1,9 | / | / | / | / | / | 3 | 1 |
| 10 | 5,26 | 1,38 | 0,5 | / | 0,57 | / | / | / | / | 3 | M |
| 11 | 4,3 | 0,92 | 0,57 | / | 1,04 | / | / | / | / | 3 | M |
| 12 | 3,73 | 1,02 | 0,33 | / | / | / | / | 0,57 | / | 3 | M |
| 13 | 4,32 | 1,21 | 0,37 | / | / | / | / | 1,3 | / | 3 | M |
| 14 | 4,25 | 1,15 | 0,35 | / | / | / | 0,6 | / | / | 3 | M |
| 15 | 4,12 | 1,5 | 0,31 | / | / | / | / | / | 0,5 | 3 | M |
| 16* | 4,2 | 1,18 | 0,33 | / | / | 0,7 | / | / | / | 2 | 4 |
| 17* | 4,26 | 1,34 | 0,31 | 1,9 | / | / | / | / | / | 3 | 2 |
| 18* | 4,03 | 1,41 | 0,29 | 1,21 | / | 1,07 | / | / | / | 2 | 2 |
| 19* | 3,76 | 1,54 | 0,16 | 1,45 | / | 0,75 | / | / | / | 2 | 3 |
| 20* | 3,35 | 1,44 | 0,24 | 1,93 | / | 0,67 | / | / | / | 2 | 3 |
| 21* | 3,45 | 1,39 | 0,23 | 1,65 | / | 0,64 | / | / | / | 2 | 2 |
| 22* | 3,91 | 1,45 | 0,32 | 1,31 | / | 0,76 | / | / | / | 2 | 1 |
| 23 | 3,6 | 1,37 | 0,25 | 1,45 | / | 1,45 | / | / | / | 1 | 2 |
| 24 | 3,81 | 1,25 | 0,20 | 1,22 | / | 1,48 | / | / | / | 1 | 2 |
| 25* | 4,35 | 1,20 | 0,30 | / | / | 0,40 | / | / | / | 2 | 5 |
| 26* | 4,10 | 0,90 | 0,65 | / | / | 1,70 | / | / | / | 3 | 2 |
| 27* | 3,90 | 1,95 | 0,30 | / | / | 1,20 | / | / | / | 3 | 2 |
| 28 | 4,03 | 2,48 | 0,35 | / | / | 1,23 | / | / | / | 1 | 2 |
| 29* | 7,52 | 1,20 | 0,5 | / | / | 1,18 | / | / | / | 2 | 3 |

| | | | | | | | | | | | |
|---|---|---|---|---|---|---|---|---|---|---|---|
| * : produit de l'essai conforme à l'invention. | | | | | | | | | | | |

L'essai 29 n'est pas conforme à l'invention. La comparaison des résultats obtenus avec le produit de référence (REF) et avec les produits des essais 1-2, 3-5, 6-7, et 8-9, montre que fa présence de TiO₂, Y₂O₃, V₂O₅, et CaO, respectivement, diminue l'indice de bullage IB. Les teneurs de ces oxydes doivent être cependant limitées pour que le pourcentage de zircone soit maintenu à un niveau supérieur à 92% pour assurer une excellente résistance à la corrosion par le verre en fusion.

En revanche, la comparaison des résultats obtenus avec le produit de référence (REF) et avec les produits des essais 10-11 et 12-13, montre que la présence de MgO ou de CeO₂, respectivement, est sensiblement sans influence sur l'indice de bullage IB.

La comparaison des résultats des essais 14, 15, 16 et 17, avec ceux des essais 1, 7, 3 et 9, respectivement, montre que l'impact positif de la présence d'oxydes de vanadium V₂O₅ (essai 15) ou de titane TiO₂ (essai 14) est nettement dégradé par le traitement thermique préalable que les échantillons 14 à 17 ont subi avant de subir le test de bullage.

La présence des oxydes de vanadium ou de titane n'est donc pas acceptable pour une utilisation en four de verrerie où d'éventuels incidents peuvent conduire à arrêter puis redémarrer le four. Par ailleurs, la présence de ces oxydes peut avoir une influence néfaste sur la coloration du verre.

Pour ces raisons, l'ajout de V₂O₅ ou TiO₂ ne constitue pas une solution au problème du bullage à basse température des produits électrofondus à forte teneur en zircone.

Le rôle positif des oxydes de calcium et d'yttrium est confirmé, quelle que soit l'histoire du produit, c'est-à-dire même si le produit a subi un traitement thermique préalable (essais 16 et 17).

Selon l'invention, une teneur minimale de 0,3% de Y₂O₃ est nécessaire pour que l'effet positif sur le bullage soit significatif. Par contre, au delà de 2% de Y₂O₃, la faisabilité des blocs devient beaucoup plus difficile.

Selon l'invention, la teneur en oxyde d'yttrium est de préférence inférieure ou égale à 1,5%.

Des teneurs d'oxyde de calcium supérieures à 1,93%, entraînent la formation de cristaux d'aluminate de chaux dans la phase vitreuse contenant Al₂O₃ et CaO. La présence de ces cristaux peut entraîner des défauts de fracturation du produit. Par ailleurs, de telles teneurs en CaO peuvent conduire à une dissolution des cristaux de zircone, ce qui diminue la résistance du produit à la corrosion.

Selon l'invention, le taux d'oxyde de calcium doit être inférieur ou égal à 1,93%.

Par ailleurs, les essais 18 à 24 montrent que CaO et Y₂O₃ peuvent être utilisés conjointement pour inhiber le phénomène de bullage à basse température. Mais la teneur totale de ces deux ajouts ne doit pas dépasser 2,6%, sinon, comme le montrent les essais 23 et 24, la faisabilité des blocs se trouve fortement dégradée.

La présence de CaO et/ou Y₂O₃ dans un produit réfractaire fondu et coulé à forte teneur en zircone, recherchée dans le produit selon l'invention, est généralement considérée comme néfaste dans la technique antérieure.

Par exemple, FR-A-2478622, qui propose d'ajouter du P₂O₅ pour améliorer la faisabilité, indique que Fe₂O₃, TiO₂, MgO et CaO sont des impuretés sans rôle avantageux dont il convient de limiter la teneur. Ce document précise également que les oxydes de terres rares, auxquels est assimilé l'oxyde d'yttrium, sont considérés comme ayant un effet néfaste et que leur teneur totale doit être limitée à 0,5% et de préférence à 0,1%.

Des échantillons de l'essai 21 ont été utilisés pour tester l'aptitude du produit selon l'invention au lâcher de pierres, encore appelé « lâcher de défauts », et sa résistance à la corrosion. Les résultats ont été comparés à ceux obtenus avec un échantillon en produit de référence (REF) ayant subi simultanément les mêmes tests.

Pour comparer l'aptitude au lâcher de défauts, les échantillons ont été immergés pendant 48 heures dans du verre sodocalcique à 1500°C. Comme le produit de référence, le produit de l'invention présente un niveau de lâcher de défauts extrêmement faible, voire nul.

Pour évaluer la résistance à la corrosion, les échantillons sont maintenus en rotation pendant 72 heures dans un bain de verre sodocalcique à 1500°C. Le volume non corrodé de l'échantillon en produit selon l'invention (essai 21) est égal à environ 90% du volume non corrodé de l'échantillon de référence (REF).

Un tel niveau de résistance à la corrosion est tout à fait acceptable pour l'utilisation de ces produits en fours de verrerie, en particulier dans les zones terminales.

Le produit selon l'invention présente donc les qualités reconnues pour les produits à forte teneur en zircone de la technique antérieure, à savoir la résistance à la corrosion et au lâcher de défauts.

L'analyse cristallographique des produits de l'invention révèle plus de 85% de zircone sous forme monoclinique, c'est-à-dire que la zircone n'est sensiblement pas stabilisée.

## Revendications

1. Produit réfractaire fondu comportant plus de 85% de zircone (ZrO₂), **caractérisé en ce qu'**il comporte, en pourcentage en poids sur la base des oxydes :
ZrO₂ > 92%
SiO₂ : ≥ 2 %
Na₂O + K₂O : 0,12 à 1%
Al₂O₃ : 0,2 à 2%
0,5% ≤ Y₂O₃ + CaO ≤ 2,6%,
Y₂O₃ : 0,3 à 2%.

2. Produit selon la revendication 1, **caractérisé en ce qu'**il comporte, en pourcentage en poids sur la base des oxydes, au moins 0,5% et/ou au plus 1,5% de Y₂O₃.

3. Produit selon l'une des revendications 1 et 2, **caractérisé en ce qu'**il comporte, en pourcentage en poids sur la base des oxydes, de 2 à 6% de SiO₂.

4. Produit selon l'une quelconque des revendications précédentes, **caractérisé en ce qu'**il comporte, en pourcentage en poids sur la base des oxydes, au moins 0,4% et/ou au plus 1,6% de Al₂O₃.

5. Produit selon l'une quelconque des revendications précédentes, **caractérisé en ce que** Na₂O : 0,12 à 1%.

6. Produit selon l'une quelconque des revendications précédentes, **caractérisé en ce qu'**il ne comporte pas de P₂O₅.

7. Produit selon l'une quelconque des revendications précédentes, dans lequel CaO : 0,5 à 1,93%.

8. Produit selon l'une quelconque des revendications précédentes, dans lequel plus de 85% de la zircone est sous forme monoclinique.

9. Utilisation d'un produit selon l'une quelconque des revendications précédentes dans une zone terminale d'un four de verrerie.

10. Utilisation d'un produit selon l'une quelconque des revendications 1 à 8 dans un four de verrerie de fabrication de verre alcalin.

11. Procédé de fabrication d'un produit réfractaire comportant au moins un mélange de matières premières, une fusion dudit mélange, et une coulée dudit mélange en fusion dans un moule, lesdites matières premières comportant au moins de l'alumine (Al₂O₃), de la zircone (ZrO₂), de la silice (SiO₂) et de l'oxyde de sodium (Na₂O) et/ou de l'oxyde de potassium (K₂O),
**caractérisé en ce que** lesdites matières premières comportent en outre au moins de l'oxyde d'yttrium Y₂O₃ et optionnellement de l'oxyde de calcium CaO, les quantités desdites matières premières étant déterminées de manière que ledit produit réfractaire soit conforme à l'une quelconque des revendications 1 à 8.

## Patentansprüche

1. Feuerfestes geschmolzenes Produkt enthaltend mehr als 85 % Zirkoniumoxid (ZrO₂), **dadurch gekennzeichnet, dass** es enthält, in Prozentangabe in Gewicht auf Basis der Oxide:
ZrO₂ > 92 %
SiO₂ : ≥ 2 %
Na₂O + K₂O: 0,12 bis 1 %
Al₂O₃: 0,2 bis 2 %
0,5 % ≤ Y₂O₃ + CaO ≤ 2,6 %,
Y₂O₃ : 0,3 bis 2 %.

2. Produkt nach Anspruch 1, **dadurch gekennzeichnet, dass** es, in Prozentangabe in Gewicht auf Basis der Oxide, mindestens 0,5 % und/oder höchstens 1,5 % Y₂O₃ enthält.

3. Produkt nach einem der Ansprüche 1 und 2, **dadurch gekennzeichnet, dass** es, in Prozentangabe in Gewicht auf Basis der Oxide, von 2 bis 6 % SiO₂ enthält.

4. Produkt nach irgend einem der vorhergehenden Ansprüche, **dadurch gekennzeichnet, dass** es, in Prozentangabe in Gewicht auf Basis der Oxide, mindestens 0,4 % und/oder höchstens 1,6 % Al₂O₃ enthält.

5. Produkt nach irgend einem der vorhergehenden Ansprüche, **dadurch gekennzeichnet, dass** Na₂O : 0,12 bis 1 %.

6. Produkt nach irgend einem der vorhergehenden Ansprüche, **dadurch gekennzeichnet, dass** es kein P₂O₅ enthält.

7. Produkt nach irgend einem der vorhergehenden Ansprüche, wobei CaO : 0,5 bis 1,93 %.

8. Produkt nach irgend einem der vorhergehenden Ansprüche, wobei mehr als 85 % des Zirkoniumoxids in monokliner Form sind.

9. Verwendung eines Produkts nach irgend einem der vorhergehenden Ansprüche in einem Endbereich eines Glasofens.

10. Verwendung eines Produkts nach irgend einem der Ansprüche 1 bis 8 in einem Glasofen zur Herstellung von Alkaliglas.

11. Verfahren zur Herstellung eines feuerfesten Produkts, enthaltend mindestens eine Mischung erster Materien, ein Schmelzen der besagten Mischung, und ein Gießen der besagten schmelzflüssigen Mischung in eine Gussform, wobei die besagten ersten Materien mindestens Aluminiumoxid (Al₂O₃), Zirkoniumoxid (ZrO₂), Siliziumoxid (SiO₂) und Natriumoxid (Na₂O) und/oder Kaliumoxid (K₂O) enthalten,
**dadurch gekennzeichnet, dass** die besagten ersten Materien unter anderem mindestens Yttriumoxid Y₂O₃ und optional Calciumoxid CaO enthalten, wobei die Mengen der besagten ersten Materien derart bestimmt sind, dass das besagte feuerfeste Produkt gemäß irgend einem der Ansprüche 1 bis 8 ist.

## Claims

1. Refractory product comprising more than 85% zirconia (ZrO₂), **characterised in that** it comprises, in percentage by weight based on oxides:
ZrO₂: > 92%,
SiO₂: ≥ 2%,
Na₂O + K₂O : 0.12 to 1%,
Al₂O₃: 0.2 to 2%,
0.5% ≤ Y₂O₃ + CaO ≤ 2.6%,
Y₂O₃: 0.3 to 2%.

2. Product according to claim 1, **characterised in that** it comprises, in percentage by weight based on oxides, at least 0.5% and/or at most 1.5% Y₂O₃.

3. Product according to one of claims 1 and 2, **characterised in that** it comprises, in percentage by weight based on oxides, from 2 to 6% SiO₂.

4. Product according to any of the preceding claims, **characterised in that** it comprises, in percentage by weight based on oxides, at least 0.4% and/or at most 1.6% Al₂O₃.

5. Product according to any of the preceding claims, **characterised in that** Na₂O: 0.12 to 1%.

6. Product according to any of the preceding claims, **characterised in that** it comprises no P₂O₅.

7. Product according to any of the preceding claims, wherein CaO: 0.5 to 1.93%.

8. Product according to any of the preceding claims, wherein more than 85% of the zirconia is in monoclinic form.

9. Use of a product according to any of the preceding claims in a terminal zone of a glass-works furnace.

10. Use of a product according to any of claims 1 to 8 in a furnace of a glass-works producing alkaline glass.

11. Method for producing a refractory product comprising at least a mixture of raw materials, a fusion of said mixture, and a casting of said fusion mixture in a mould, said raw materials comprising at least alumina (Al₂O₃), zirconia (ZrO₂), silica (SiO₂) and sodium dioxide (Na₂O) and/or potassium oxide (K₂O), **characterised in that** said raw materials also comprise at least yttrium oxide Y₂O₃ and optionally calcium oxide CaO, the quantities of said raw materials being determined such that said refractory product conforms to any of claims 1 to 8.
